# FASCICULE DE BREVET EUROPEEN

(11) **EP 2 234 041 B1**
(45) Date de publication et mention de la délivrance du brevet: **14.08.2013**
(21) Numéro de dépôt: 10157448.1
(22) Date de dépôt: 24.03.2010
(51) Int. Cl.: G07F 7/08, G06Q 20/00

(54) **Procédé et dispositif permettant de sélectionner automatiquement une application pouvant être mise en oeuvre par ce dispositif**
Verfahren und Vorrichtung zur automatischen Auswahl einer Anwendung, die durch diese Vorrichtung ausgeführt werden kann
Method and device for automatically selecting an application that can be used by said device

(30) Priorité: 27.03.2009 FR 0901484
(43) Date de publication de la demande: 29.09.2010
(73) Titulaire: Oberthur Technologies, 92300 Levallois-Perret (FR)
(72) Inventeur: Diallo, Sophie, 94200, IVRY SUR SEINE (FR); de Brito, Jimmy, 77400, Saint Thibault des Vignes (FR); Bricout, Franck, 77000, VAUX LE PENIL (FR)
(74) Mandataire: Delumeau, François Guy

(56) Documents cités:
- WO-A2-2009/013700
- US-A1- 2007 293 155
- US-A1- 2008 129 450
- US-A1- 2008 306 849
- NXP: "MF1ICS50 Functional Specification" INTERNET CITATION, [Online] 29 janvier 2008 (2008-01-29), pages 1-19, XP002515090 Extrait de l'Internet: URL:http://www.nxp.com/acrobat_download/ot her/identification/M001053_MF1I CS50_rev5_3.pdf> [extrait le 2009-02-13]

## Description

### Arrière-plan de l'invention

La présente invention se situe dans le domaine des dispositifs électroniques multi-applicatifs aptes à communiquer avec une entité externe, ces dispositifs étant préférentiellement portables.

Elle s'applique en particulier, et de façon non limitative, aux cartes à microcircuits (cartes à puces) aptes à communiquer avec un lecteur de ladite carte, pour la mise en oeuvre d'une ou plusieurs applications (transaction de paiement, contrôle d'accès, ...).

Le document US 2008/0306849 décrit un procédé pouvant être mis en oeuvre par un lecteur pour communiquer avec une carte à microcircuit apte à mettre en oeuvre des applications conformes au protocole ISO 14443-4 et des applications conformes au protocole MIFARE. Selon ce procédé, il est nécessaire que le lecteur prenne connaissance des applications supportées par la carte à microcircuit afin de pouvoir les sélectionner.

L'invention permet d'éviter cette contrainte.

### Objet et résumé de l'invention

Selon un premier aspect, l'invention concerne un dispositif électronique comportant :
- des moyens pour recevoir des messages émis par une entité externe ;
- des moyens pour mettre en oeuvre au moins deux applications communiquant avec cette entité externe selon le même protocole ;
- des moyens de génération aptes à générer un événement prédéterminé sur réception d'au moins un message particulier reçu de cette entité ou en cas d'initialisation de la communication avec cette entité ; et
- des moyens de sélection aptes à détecter cet événement et à sélectionner une application parmi les applications précitées, le choix de l'application sélectionnée se faisant indépendamment de tout message reçu de ladite entité externe.

Corrélativement, l'invention concerne également un procédé de sélection pouvant être mis en oeuvre par un dispositif électronique apte à communiquer avec une entité externe et à mettre en oeuvre au moins deux applications communiquant avec cette entité externe selon le même protocole, ce procédé comportant :
- une étape de génération d'un événement prédéterminé sur réception d'au moins un message particulier reçu de cette entité ou en cas d'initialisation de la communication avec cette entité; et
- une étape de détection de cet événement ; et
- une étape de sélection d'une application parmi les applications précitées, le choix de l'application sélectionnée se faisant indépendamment de tout message reçu de ladite entité externe.

Ainsi, et de façon très avantageuse, l'invention permet de sélectionner une application mise en oeuvre par le dispositif électronique sans qu'aucune commande de sélection de cette application n'ai été émise par l'entité externe.

Dans un mode particulier de réalisation ; le dispositif électronique selon l'invention comporte :
- des moyens pour exécuter un premier module informatique apte à lancer l'exécution d'un deuxième module informatique, ce deuxième module étant apte à mettre en oeuvre les applications précitées,
- les moyens de génération d'événement étant mis en oeuvre par le premier module.

L'invention trouvera une application privilégiée, mais non limitative, lorsque le deuxième module informatique mettant en oeuvre les applications précitées est vu, de ce dispositif électronique, comme une "boîte noire".

C'est notamment généralement le cas lorsque le deuxième module informatique a été développé par un tiers.

Dans ce document, la notion de « module informatique » est à comprendre au sens large : elle vise notamment un programme informatique, un sous-programme informatique, une fonction ou une bibliothèque de fonctions.

Dans un mode particulier de réalisation de l'invention :
- le premier module est apte à communiquer avec l'entité externe selon les normes ISO 14443-1 à ISO 14443-3 ;
- lesdites applications sont des applications MIFARE (marque déposée) ; et
- le deuxième module est apte à mettre en oeuvre une application pour gérer l'envoi et la réception des messages échangés avec ladite entité externe dans le cadre desdites applications MIFARE.

Pour rappel, la technologie MIFARE s'appuie sur le standard ISO 14443 type A, et s'en distingue en remplaçant la couche ISO 14443-4 par le protocole propriétaire MIFARE, les technologies "ISO 14443 type A" et MIFARE ayant en commun les protocoles ISO 14443-1, ISO 14443-2 et ISO 14443-3.

Pour plus de renseignements sur la technologie MIFARE, l'homme du métier pourra se reporter au document "MF1ICS50, Functional specification, Rev. 5.3" du 29 janvier 2008.

De façon connue, les messages envoyés par un lecteur (ou plus généralement par une entité externe), à une carte à microcircuit (ou plus généralement à un dispositif électronique portable), dans le cadre d'une application MIFARE, consistent essentiellement en des messages de commande pour accéder en lecture ou en écriture à une mémoire dédiée à cette application MIFARE.

Dans ce domaine particulier, il est fréquent d'appeler « application MIFARE » la mémoire elle-même. Par la suite, on distinguera donc :
- l'application MIFARE, c'est-à-dire la mémoire : de
- l'application gérant les messages échangés avec le lecteur pour accéder à la mémoire en lecture ou en écriture.

Par conséquent, dans un mode particulier de mise en oeuvre, l'invention permet de sélectionner une application MIFARE mise en oeuvre par exemple par une carte à microcircuit, pour effectuer une transaction avec un lecteur de cette carte, sans qu'aucune commande de sélection de l'application MIFARE ou de la mémoire dédiée à cette application ne soit émise par ce lecteur.

Dans un mode de réalisation de l'invention, le premier module génère l'événement prédéterminé sur réception d'une commande interprétable par ce premier module.

Lorsque le premier module est apte à communiquer avec l'entité externe selon les normes ISO 14443-1 à ISO 14443-3, le message particulier générant l'événement prédéterminé au sens de l'invention peut notamment être choisi parmi:
- du message de polling REQA émis périodiquement par le lecteur ;
- du message SEL de sélection d'une carte (dispositif électronique au sens de l'invention) ; ou
- du message HALT de fin de transaction défini par la norme ISO 14443-3.

Ce mode de réalisation permet avantageusement de sélectionner une application MIFARE, après la fin d'une première transaction MIFARE, quelle que soit la façon dont cette première application MIFARE se termine, par exemple suite à l'envoi d'un message HALT par le lecteur ou par coupure du champ électromagnétique.

Il est possible, dans certains cas, que l'entité externe émette plusieurs fois certains messages, par exemple plusieurs messages de polling.

L'homme du métier comprendra que dans de telles circonstances, il se peut, que certaines applications ne soient jamais sélectionnées.

L'invention propose deux solutions pour éviter ce problème :
- soit générer l'événement prédéterminé juste avant de lancer l'exécution du deuxième module ;
- soit générer l'événement prédéterminé sur réception d'une commande non interprétable par le premier module.

Dans un mode de réalisation particulier, le premier module reprend son exécution après l'exécution du deuxième module et le premier module génère l'événement prédéterminé après la reprise d'exécution.

Il est fondamental de bien noter, que conformément à l'invention, la sélection de l'application, c'est-à-dire le choix de l'application parmi les applications possibles se fait indépendamment de tout message reçu du lecteur.

Dans un mode particulier de réalisation, les moyens de sélection du dispositif selon l'invention sélectionnent les applications les unes après les autres, de façon séquentielle.

En variante, les applications peuvent être sélectionnées de façon cyclique, ou aléatoire.

Dans un mode particulier de réalisation, les différentes étapes du procédé de sélection sont déterminées par des instructions de programmes d'ordinateurs.

En conséquence, l'invention vise aussi un programme d'ordinateur sur un support d'informations, ce programme étant susceptible d'être mis en oeuvre dans un dispositif électronique communiquant ou plus généralement dans un ordinateur, ce programme comportant des instructions adaptées à la mise en oeuvre des étapes d'un procédé de sélection tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Dans la première variante de réalisation de l'invention mentionnée précédemment, la prise de décision selon laquelle une application doit être sélectionnée par le dispositif électronique est déclenchée par l'occurrence d'un événement lié à la réception d'un message particulier reçu du lecteur.

Selon un deuxième aspect, l'invention vise aussi un dispositif électronique comportant :
- des moyens pour mettre en oeuvre au moins deux applications MIFARE ; et
- des moyens pour sélectionner systématiquement une desdites applications MIFARE après l'exécution d'une desdites applications MIFARE.

Corrélativement, l'invention concerne un procédé de sélection pouvant être mis en oeuvre par un dispositif électronique apte à mettre en oeuvre au moins deux applications MIFARE, ce procédé sélectionnant systématiquement une des applications MIFARE après l'exécution d'une desdites applications MIFARE.

La sélection d'une application MIFARE peut aussi être faîte de façon séquentielle, cyclique ou aléatoire.

Dans un mode particulier de réalisation de cette deuxième variante de réalisation, le dispositif électronique selon l'invention comporte des moyens pour exécuter un premier module informatique apte à lancer l'exécution d'un deuxième module informatique, ce deuxième module (PG2) étant apte à mettre en oeuvre les applications MIFARE, les moyens de sélection étant mis en oeuvre par le premier module.

Dans un mode particulier de réalisation, le premier module sélectionne l'application MIFARE juste avant de lancer l'exécution du deuxième module.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un dispositif électronique conforme à l'invention dans un mode particulier de réalisation ;
- la figure 2 représente un détail de ce dispositif ;
- les figures 3A à 3D et la figure 4 représentent, sous forme d'organigramme des procédés de sélection conformes à différents modes de réalisation de l'invention.

### Description détaillée d'un mode de réalisation

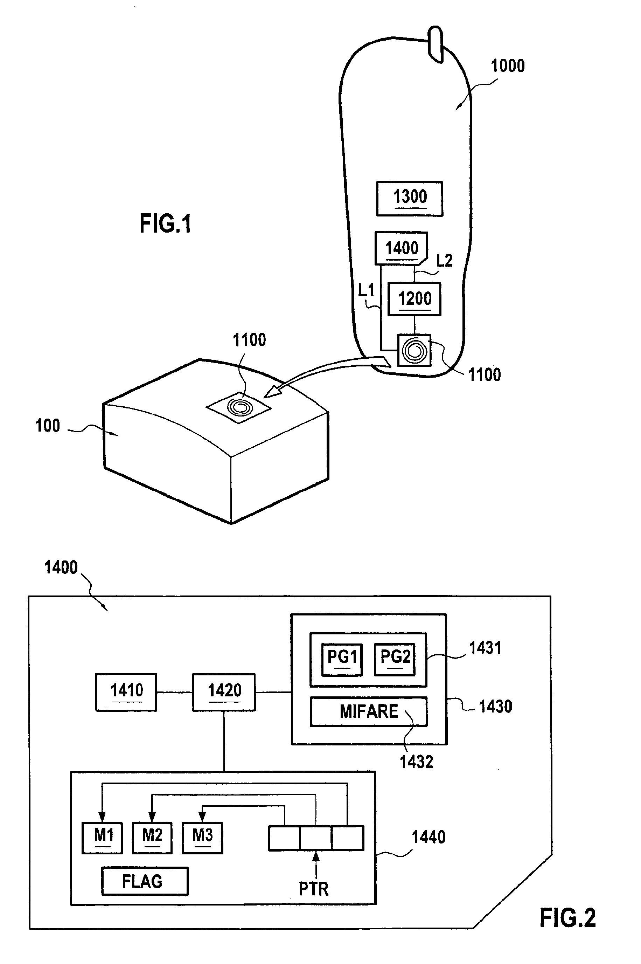

La **figure 1** représente un dispositif 1000 de sélection conforme à un mode particulier de réalisation de l'invention.

Ce dispositif 1000 est un téléphone portable.

Il comporte un processeur 1300 apte à mettre en oeuvre les opérations classiques d'un téléphone portable, à savoir les opérations de téléphonie, d'envoi et de réception de messages, et les opérations de gestion de l'interface homme-machine.

Dans l'exemple de réalisation décrit ici, le dispositif 1000 comporte des moyens de communication sans contact avec un lecteur externe 100. Ces moyens de communication sans contact sont principalement constitués par une antenne 1100 et par un microprocesseur 1200 conforme à la norme NFC (« Near Field Communication » ou communication en champ proche) ou ISO 14443.

Dans l'exemple de réalisation décrit ici, le téléphone portable 1000 comporte une carte à microcircuit (carte SIM) 1400 alimentée en énergie par l'antenne 1100 via un circuit L1.

Dans le mode de réalisation décrit ici, le microprocesseur 1200 remplit les fonctions de convertisseur analogique/numérique et de modulateur/démodulateur pour communiquer via l'antenne 1100. Un tel microprocesseur est communément appelé CLF (pour Contact Less Frontend).

Dans l'exemple de réalisation décrit ici, la carte SIM 1400 communique avec le microprocesseur 1200, selon une connexion L2 et conformément au protocole SWP (Single Wire Protocol).

La **figure 2** représente en détail la carte SIM 1400 du téléphone portable 1000.

Cette carte SIM, préférentiellement conforme à la norme ISO7816, comporte une interface d'entrée/sortie 1410, une mémoire morte de type ROM 1430 et une mémoire non volatile réinscriptible de type EEPROM 1440, ces éléments étant reliés par un bus à un microprocesseur 1420.

Dans le mode de réalisation décrit ici, la mémoire non volatile réinscriptible EEPROM 1440 comporte :
- trois mémoires M1, M2, M3, chacune constituant une application au sens de la technologie MIFARE ; et
- un pointeur PTR pointant vers la mémoire M1 à M3 sélectionnée à un moment donné.

Dans le mode de réalisation décrit ici, la mémoire morte de type ROM 1430 comporte deux programmes d'ordinateurs, à savoir :
- un premier programme d'ordinateur PG1, celui-ci comportant notamment le système d'exploitation de la carte SIM 1400, des instructions pour la mise en oeuvre des protocoles ISO 14441-1 à 14441-3 et un module permettant de sélectionner une application MIFARE M1 à M3 ;
- un programme d'ordinateur PG2 apte à mettre en oeuvre une application pour gérer l'envoi et la réception des messages échangés avec l'entité externe 100 dans le cadre desdites applications MIFARE M1, à M3.

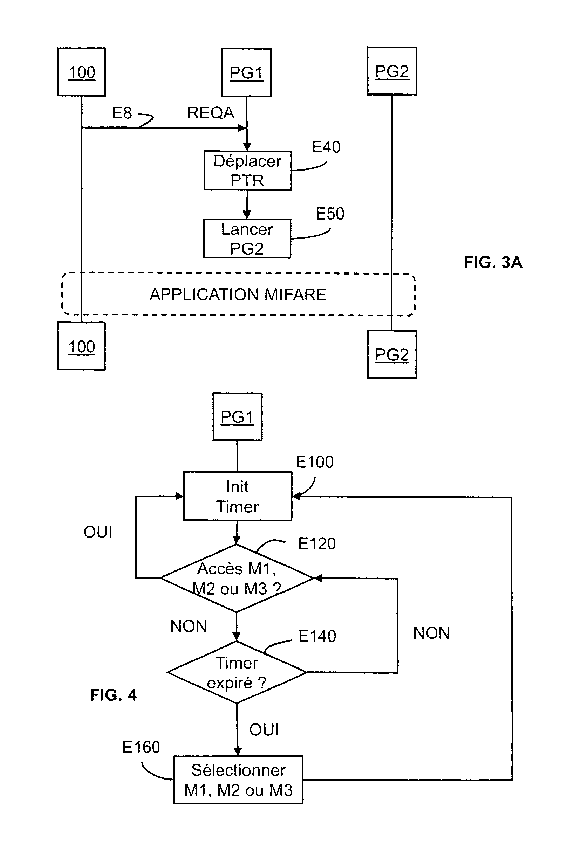

En référence à la **figure 3A****,** nous allons maintenant décrire les principales étapes d'un premier procédé de sélection conforme à l'invention, ce procédé étant mis en oeuvre par le téléphone portable 1000 décrit précédemment en référence aux figures 1 et 2.

Nous supposerons dans un premier temps qu'un utilisateur approche le téléphone portable 1000 à quelques centimètres du lecteur 100 de sorte que l'antenne 1100 du téléphone portable entre dans le champ électromagnétique généré par ce lecteur.

La carte SIM 1400 est donc alimentée par le circuit L1 ou par la batterie du téléphone. Dans le mode de réalisation décrit ici, le premier programme d'ordinateur PG1 est alors mis en oeuvre par le microprocesseur 1420 de la carte SIM.

Nous supposerons que le pointeur PTR est initialisé, lors d'une phase préliminaire de personnalisation, pour pointer par exemple sur l'application MIFARE M1.

Nous supposerons que le lecteur 100 envoie un message de polling REQA reçu par le module PG1 au cours d'une étape E8.

La réception de ce message constitue un événement au sens de l'invention.

Dans le mode de réalisation décrit ici, le programme PG1 comporte une étape E40 pour déplacer le pointeur PTR de façon séquentielle, de sorte qu'il pointe alors sur l'application MIFARE M2.

Le programme PG1 lance alors, au cours d'une étape le deuxième programme informatique PG2 pour gérer l'échange des messages échangés avec l'entité externe 100 dans le cadre de l'application MIFARE M2.

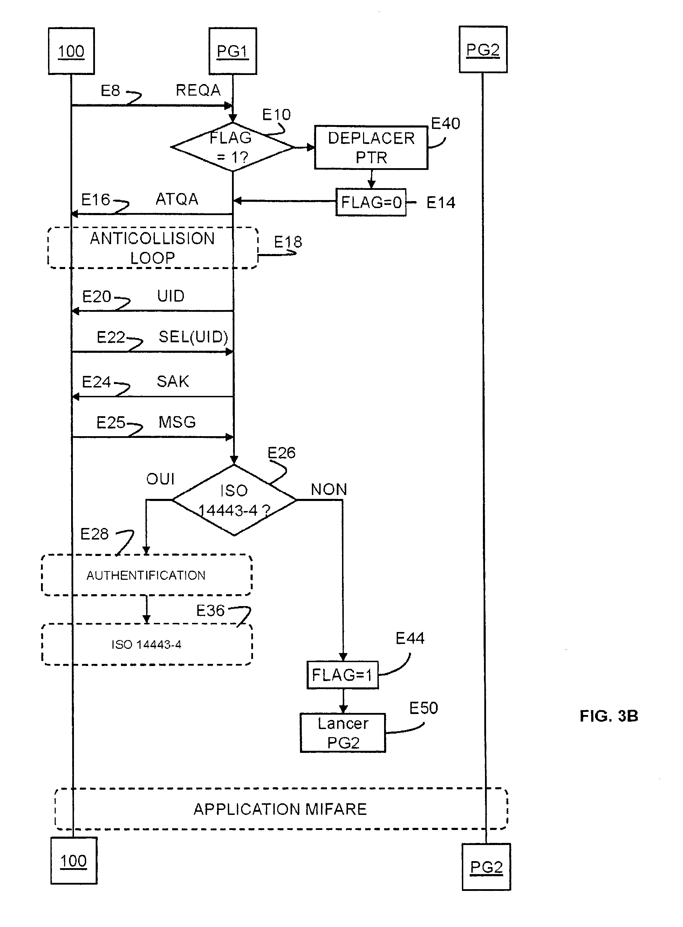

En référence à **la** **figure 3B****,** nous décrivons les étapes d'un deuxième procédé de sélection conforme à l'invention.

Dans ce mode de réalisation, le premier programme d'ordinateur PG1 est apte à mettre en oeuvre les normes ISO 14441-1 à 14441-4.

Dans ce mode de réalisation, la mémoire non volatile EEPROM 1440 comporte un registre apte à mémoriser la valeur d'un indicateur FLAG initialisé à 0.

Dans l'exemple de réalisation décrit ici, le pointeur PTR est initialisé pour pointer sur la mémoire MIFARE M1.

Dans l'exemple de réalisation décrit ici, lorsque le premier programme d'ordinateur PG1 reçoit le message de polling REQ A, il vérifie, au cours d'une étape E10, si l'indicateur FLAG mémorisé dans la mémoire non volatile EEPROM 1440 comporte la valeur prédéterminée « 1 » ou non.

Si tel est le cas, le pointeur PTR est déplacé au cours d'une étape E40 et l'indicateur FLAG est positionné à la valeur « 0 » au cours d'une étape E14.

Dans l'exemple décrit ici, cet indicateur FLAG est initialisé avec la valeur « 0 », si bien que sur cette première réception du message de polling REQ A, les étapes E12 et E14 ne sont pas mises en oeuvre, aucun événement n'étant ainsi détecté à ce stade.

Conformément au protocole ISO 14414-1 à ISO 14414-3, le dispositif 1000 conforme à l'invention répond à la requête REQ A par l'envoi d'un message ATQA au cours d'une étape E16.

Puis, au cours d'une étape E18, le lecteur 100 et le dispositif électronique 1000 conforme à l'invention mettent en oeuvre une étape générale E18 connue de l'homme du métier sous le nom de « Anticollission Loop » permettant au lecteur 100 de sélectionner effectivement le dispositif 1000 selon l'invention parmi d'autres dispositifs ou cartes à microcircuits situés dans le champ électromagnétique du lecteur 100.

A l'issue de cette phase de gestion des collisions, le dispositif 1000 envoie au lecteur 100, au cours d'une étape E20, un identifiant UID identifiant, de manière unique, le dispositif 1000.

Conformément au protocole ISO 14443-1 à 14443-3, le lecteur 100 sélectionne le dispositif 1000 au cours d'une étape E22 par l'envoi d'un message SEL (UID), le téléphone 1000 acquittant cette sélection par l'envoi d'un message SAK (Select Acknowledge).

Ces différents messages (REQ A, ATQA, Anticollision Loop, UID, SEL(UID) et SAK sont des messages communs aux applications utilisant le protocole ISO 14443-4 et aux applications conformes à la technologie MIFARE.

Nous supposons maintenant que le lecteur 100 émet, au cours d'une étape E25 un message MSG.

Au cours d'un test E26, le premier module PG1 vérifie si ce message est conforme ou non au protocole ISO 14443-4.

Si tel est le cas, le résultat du test E26 est positif.

Ce test est alors suivi par une procédure E28 d'authentification mutuelle mise en oeuvre par le lecteur 100 et le téléphone portable 1000, conforme au protocole ISO 14443-4 puis par une étape générale E36 au cours de laquelle le téléphone 1000 communique avec le lecteur 100 conformément au protocole ISO 14443-4.

Si, au cours de l'étape E26, le premier module PG1détecte que le message MSG reçu à l'étape E25 n'est pas conforme au protocole ISO 14443-4, le résultat du test E26 est négatif.

Ce test est alors suivi par une étape E44 au cours de laquelle le premier programme d'ordinateur PG1 positionne à la valeur "1" l'indicateur FLAG.

Puis, le premier programme d'ordinateur PG1 lance le deuxième programme d'ordinateur PG2 au cours d'une étape E50.

Une transaction MIFARE peut donc être mise en oeuvre entre le lecteur 100 et l'application MIFARE M1 du téléphone portable 1000.

Ultérieurement, lorsque le téléphone portable 1000 recevra un nouveau message de polling REQ A (à l'étape E8), le résultat du test E10 où l'on teste la valeur de l'indicateur FLAG sera positif, si bien que les étapes E12 (déplacement du pointeur PTR), et E14 (réinitialisation de l'indicateur FLAG à la valeur « 0 » seront exécutées.

Le téléphone 1000 sélectionne en conséquence l'application MIFARE M2.

Dans ce deuxième mode de réalisation, la réception d'un message non interprétable par le premier programme d'ordinateur PG1 constitue un événement au sens de l'invention.

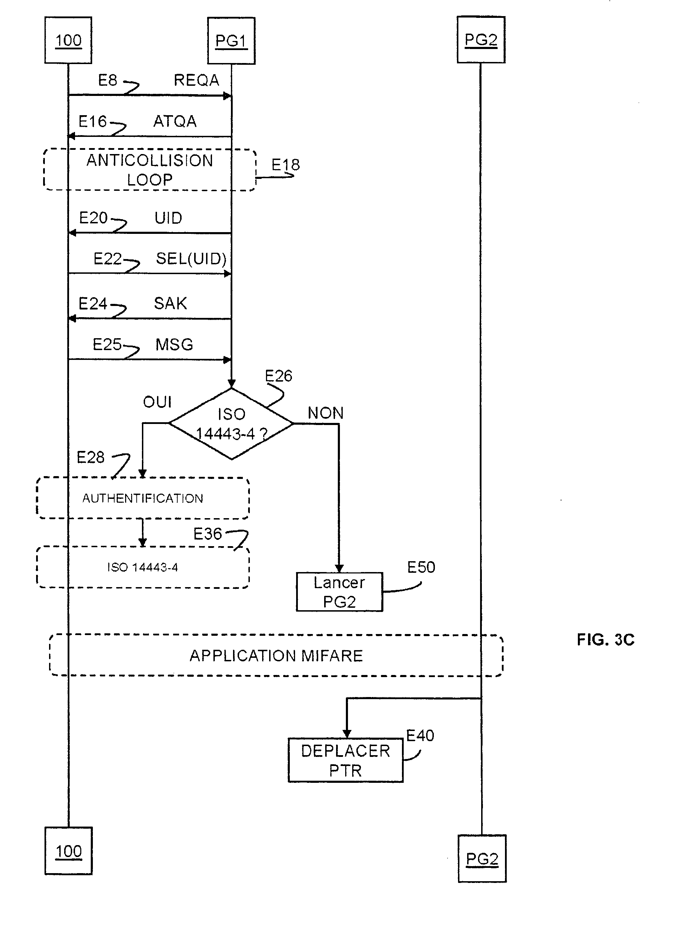

Dans le troisième mode de réalisation représenté à **la** **figure 3C****,** le deuxième programme d'ordinateur PG2 rend la main au premier programme d'ordinateur PG1 après l'exécution de l'application MIFARE et le déplacement du pointeur s'effectue, à l'étape E40, après cette reprise en main.

Ce mode de réalisation évite d'utiliser un indicateur FLAG.

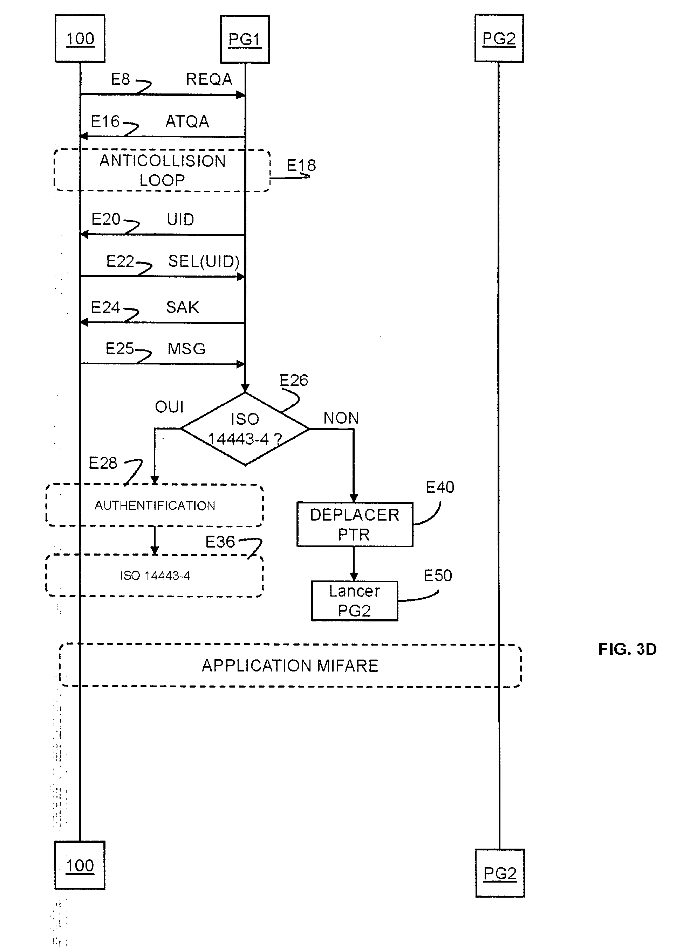

Dans le quatrième mode de réalisation représenté à la **figure 3D****,** le premier module PG1 déplace le pointeur PTR (étape E40), après avoir reçu un message non interprétable, et juste avant de lancer l'exécution du deuxième module PG2.

Dans les modes de réalisation décrit précédemment, le pointeur PTR est déplacé séquentiellement.

En variante, il peut être déplacé de façon cyclique, ou choisi aléatoirement.

La **figure 4** représente un procédé de sélection conforme à une deuxième variante de réalisation de l'invention.

Dans ce mode de réalisation, le premier programme d'ordinateur PG1 est apte à détecter si le deuxième programme d'ordinateur PG2 exécute une application MIFARE en surveillant l'accès aux mémoires M1 à M3.

Dans le mode de réalisation décrit ici, le premier programme d'ordinateur PG1 initialise, au cours d'une étape E100, une horloge (timer) avec une durée prédéterminée.

Dès lors qu'un accès à l'une des mémoires M1 à M3 a lieu (test E120 positif), on considère qu'une application MIFARE est en cours avec le lecteur 100 et on réinitialise l'horloge avec cette même durée.

Au contraire, si aucun accès à une des mémoires M1 à M3 n'a lieu pendant cette durée (test E140 positif), on considère qu'il n'y a pas d'application MIFARE en cours (soit qu'il n'y en a jamais eu soit qu'elle est terminée), et on sélectionne une application MIFARE.

Dans la plupart des cas, l'application MIFARE ainsi sélectionnée sera différente de l'application MIFARE en cours.

Mais dans un mode de réalisation de l'invention, l'application MIFARE est sélectionnée aléatoirement et il se peut que la même application MIFARE soit sélectionnée plusieurs fois de suite.

Dans tous les modes de réalisation décrits précédemment (figures 3A à 3D et figure 4), la mémoire non volatile réinscriptible EEPROM 1440 comportait trois mémoires distinctes M1, M2, M3.

En variante, la mémoire non volatile réinscriptible EEPROM 1440 ne comporte qu'une seule mémoire M, et à chaque changement d'application MIFARE, on copie le contenu de l'application MIFARE dans cette mémoire M. Dans cette variante, il n'est pas nécessaire d'utiliser un pointeur PTR, l'application MIFARE en cours pouvant être déterminée en comparant le contenu de la mémoire M avec chacune des applications MIFARE.

Dans les modes de réalisation décrits précédemment, l'invention était principalement mise en oeuvre dans la carte à microcircuit 1400 du téléphone portable 1000.

En variante, elle pourrait être mise en oeuvre dans le téléphone portable lui-même, les programmes d'ordinateurs PG1 et PG2 étant exécutés par le processeur 1300 de ce téléphone.

L'invention peut aussi être mise en oeuvre dans d'autres types de dispositif électronique et notamment dans une carte à microcircuit munie de moyens de communication sans contact, notamment d'une antenne.

## Revendications

1. Dispositif électronique (1000) comportant :
- des moyens (1100) pour recevoir des messages émis par une entité externe (100) ; et
- des moyens (1420) pour mettre en oeuvre au moins deux applications communiquant avec ladite entité externe selon le même protocole, chacune desdites applications étant dans une mémoire dédiée; ce dispositif (1000) étant **caractérisé en ce qu'**il comporte :
- des moyens (PG1) de génération aptes à générer un événement prédéterminé sur réception d'au moins un message particulier reçu de ladite entité (100) ou en cas d'initialisation de la communication avec ladite entité (100) ; et
- des moyens (PG2) de sélection aptes à détecter ledit événement et à sélectionner une application parmi lesdites applications, le choix de l'application sélectionnée se faisant independamment de tout message reçu de ladite entité externe (100) et en utilisant un pointeur pointant vers l'application sélectionnée à un moment donné, la détection dudit événement entraînant le déplacement dudit pointeur,
lesdites applications étant des applications MIFARE.

2. Dispositif électronique selon la revendication 1, **caractérisé en ce qu'**il comporte :
- des moyens pour exécuter un premier module informatique (PG1) apte à lancer l'exécution d'un deuxième module informatique (PG2), ce deuxième module (PG2) étant apte à mettre en oeuvre lesdites applications ; et **en ce que** :
- lesdits moyens de génération d'événement sont mis en oeuvre par le premier module (PG1).

3. Dispositif électronique selon la revendication 2 **caractérisé en ce que** ledit premier module (PG1) génère ledit événement prédéterminé sur réception d'une commande (REQA) interprétable par ledit premier module (PG1).

4. Dispositif électronique selon la revendication 2 **caractérisé en ce que** ledit premier module (PG1) génère ledit événement prédéterminé juste avant de lancer l'exécution dudit deuxième module (PG2).

5. Dispositif électronique selon la revendication 4 **caractérisé en ce que** ledit premier module (PG1) génère ledit événement prédéterminé sur réception d'une commande (REQA) non interprétable par ledit premier module (PG1).

6. Dispositif électronique selon la revendication 2, dans lequel ledit premier module (PG1) reprend son exécution après l'exécution dudit deuxième module (PG2), **caractérisé en ce que** ledit premier module (PG1) génère ledit événement prédéterminé après ladite reprise d'exécution.

7. Dispositif électronique selon l'une quelconque des revendications 2 à 5, **caractérisé en ce que** :
- ledit premier module (PG1) est apte à communiquer avec ladite entité externe (100) selon les normes ISO 14443-1 à ISO 14443-3 ;
et **en ce que** :
- ledit deuxième module (PG2) est apte à mettre en oeuvre une application (1432) pour gérer l'envoi et la réception des messages échangés avec ladite entité externe (100) dans le cadre desdites applications MIFARE.

8. Dispositif électronique selon l'une quelconque des revendications 1 à 6, **caractérisé en ce que** lesdits moyens de sélection sélectionnent ladite application parmi lesdites applications de façon séquentielle.

9. Procédé de sélection pouvant être mis en oeuvre par un dispositif électronique (1000) apte à communiquer avec une entité externe et à mettre en oeuvre au moins deux applications communiquant avec ladite entité externe selon le même protocole, chacune desdites applications étant dans une mémoire dédiée, ce procédé comportant :
- une étape de génération d'un événement prédéterminé sur réception d'au moins un message particulier reçu de ladite entité ou en cas d'initialisation de la communication avec ladite entité; et
- une étape de détection dudit événement ; et
- une étape de sélection d'une application parmi lesdites applications, le choix de l'application sélectionnée pouvant se faire independamment de tout message reçu de ladite entité externe (100) et en utilisant un pointeur pointant vers l'application sélectionnée à un moment donné, la détection dudit événement entraînant le déplacement dudit pointeur,
lesdites applications étant des applications MIFARE.

10. Programme d'ordinateur comportant des instructions pour l'exécution des étapes du procédé de sélection selon la revendication 9 lorsque ledit programme est exécuté par un ordinateur.

11. Support d'enregistrement lisible par un ordinateur sur lequel est enregistré un programme d'ordinateur comprenant des instructions pour l'exécution des étapes du procédé de sélection selon la revendication 10.

## Patentansprüche

1. Elektronische Vorrichtung (1000), umfassend:
- Mittel (1100) zum Empfangen von durch eine externe Einheit (100) gesandten Nachrichten; und
- Mittel (1420) zum Ausführen von wenigstens zwei Anwendungen, die mit der externen Einheit nach dem gleichen Protokoll kommunizieren, wobei eine jede der Anwendungen sich in einem dedizierten Speicher befindet; wobei diese Vorrichtung (1000) **dadurch gekennzeichnet ist, daß** sie umfaßt:
- Generierungsmittel (PG1), die geeignet sind, bei Empfang wenigstens einer von der Einheit (100) empfangenen besonderen Nachricht oder im Fall einer Initialisierung der Kommunikation mit der Einheit (100) ein vorbestimmtes Ereignis zu generieren; und
- Auswahlmittel (PG2), die geeignet sind, das Ereignis zu erfassen und eine Anwendung aus den Anwendungen auszuwählen, wobei die Wahl der ausgewählten Anwendung unabhängig von jeder von der externen Einheit (100) empfangenen Nachricht sowie unter Verwendung eines Zeigers erfolgt, der zu einem gegebenen Zeitpunkt auf die ausgewählte Anwendung zeigt, wobei die Erfassung des Ereignisses zum Bewegen des Zeigers führt,
wobei die Anwendungen MIFARE-Anwendungen sind.

2. Elektronische Vorrichtung nach Anspruch 1, **dadurch gekennzeichnet, daß** sie umfaßt:
- Mittel zum Ausführen eines ersten Computermoduls (PG1), das geeignet ist, die Ausführung eines zweiten Computermoduls (PG2) anzustoßen, wobei dieses zweite Modul (PG2) geeignet ist, die Anwendungen auszuführen; und daß:
- die Mittel zum Generieren eines Ereignisses durch das erste Modul (PG1) angewandt werden.

3. Elektronische Vorrichtung nach Anspruch 2, **dadurch gekennzeichnet, daß** das erste Modul (PG1) das vorbestimmte Ereignis bei Empfang eines durch das erste Modul (PG1) interpretierbaren Befehls (REQA) generiert.

4. Elektronische Vorrichtung nach Anspruch 2, **dadurch gekennzeichnet, daß** das erste Modul (PG1) das vorbestimmte Ereignis genau vor Anstoßen der Ausführung des zweiten Moduls (PG2) generiert.

5. Elektronische Vorrichtung nach Anspruch 4, **dadurch gekennzeichnet, daß** das erste Modul (PG1) das vorbestimmte Ereignis bei Empfang eines durch das erste Modul (PG1) nicht interpretierbaren Befehls (REQA) generiert.

6. Elektronische Vorrichtung nach Anspruch 2, wobei das erste Modul (PG1) seine Ausführung nach der Ausführung des zweiten Moduls (PG2) fortsetzt, **dadurch gekennzeichnet, daß** das erste Modul (PG1) das vorbestimmte Ereignis nach der Ausführungsfortsetzung generiert.

7. Elektronische Vorrichtung nach einem der Ansprüche 2 bis 5, **dadurch gekennzeichnet, daß**:
- das erste Modul (PG1) geeignet ist, mit der externen Einheit (100) nach den Normen ISO 14443-1 bis ISO 14443-3 zu kommunizieren;
und daß:
- das zweite Modul (PG2) geeignet ist, eine Anwendung (1432) auszuführen, um das Senden und das Empfangen der mit der externen Einheit (100) im Rahmen der MIFARE-Anwendungen ausgetauschten Nachrichten zu steuern.

8. Elektronische Vorrichtung nach einem der Ansprüche 1 bis 6, **dadurch gekennzeichnet, daß** die Auswahlmittel die Anwendung aus den Anwendungen sequentiell auswählen.

9. Auswahlverfahren, das durch eine elektronische Vorrichtung (1000) durchgeführt werden kann, die geeignet ist, mit einer externen Einheit zu kommunizieren und wenigstens zwei Anwendungen, die mit der externen Einheit nach dem gleichen Protokoll kommunizieren, auszuführen, wobei eine jede der Anwendungen sich in einem dedizierten Speicher befindet, wobei dieses Verfahren umfaßt:
- einen Schritt zum Generieren eines vorbestimmten Ereignisses bei Empfang wenigstens einer von der Einheit empfangenen besonderen Nachricht oder im Fall einer Initialisierung der Kommunikation mit der Einheit; und
- einen Schritt zum Erfassen des Ereignisses; und
- einen Schritt zum Auswählen einer Anwendung aus den Anwendungen, wobei die Wahl der ausgewählten Anwendung unabhängig von jeder von der externen Einheit (100) empfangenen Nachricht sowie unter Verwendung eines Zeigers erfolgen kann, der zu einem gegebenen Zeitpunkt auf die ausgewählte Anwendung zeigt, wobei die Erfassung des Ereignisses zum Bewegen des Zeigers führt,
wobei die Anwendungen MIFARE-Anwendungen sind.

10. Computerprogramm, umfassend Befehle für die Durchführung der Schritte des Auswahlverfahrens nach Anspruch 9, wenn das Programm durch einen Computer ausgeführt wird.

11. Mittels eines Computers lesbarer Speicherträger, auf dem ein Befehle für die Durchführung der Schritte des Auswahlverfahrens umfassendes Computerprogramm nach Anspruch 10 gespeichert ist.

## Claims

1. An electronic device (1000) comprising:
· means (1100) for receiving messages transmitted by an external entity (100); and
· means (1420) for implementing at least two applications (M1, M2, M3) communicating with said external entity using the same protocol, each of said applications being in a dedicated memory;
the device (1000) being **characterized in that** it includes:
· generator means (PG1) suitable for generating a predetermined event on receiving at least one particular message received from said entity (100) or in the event of communication being initialized with said entity (100); and
· selection means (PG2) suitable for detecting said event and for selecting one application amongst said applications, the selected application being chosen independently of any message received from said external entity (100) and by using a pointer pointing to the selected application at a given instant, the detection of said event triggering the movement of said pointer,
said applications being MIFARE application.

2. An electronic device according to claim 1, **characterized in that**:
· it includes means for executing a first computer module (PG1) suitable for launching the execution of a second computer module (PG2), the second module (PG2) being suitable for implementing said applications; and **in that**
· said event generation means are implemented by the first module (PG1).

3. An electronic device according to claim 2, **characterized in that** said first module (PG1) generates said predetermined event on receiving a command (REQA) that is interpretable by said first module (PG1).

4. An electronic device according to claim 2, **characterized in that** said first module (PG1) generates said predetermined event immediately after launching the execution of said second module (PG2).

5. An electronic device according to claim 4, **characterized in that** said first module (PG1) generates said predetermined event on receiving a command (REQA) that is not interpretable by said first module (PG1).

6. An electronic device according to claim 2, wherein said first module (PG1) resumes execution after execution of said second module (PG2), the device being **characterized in that** said first module (PG1) generates said predetermined event after said resumption of execution.

7. An electronic device according to any one of claims 2 to 5, **characterized in that**:
· said first module (PG1) is suitable for communicating with said external entity (100) in application of ISO 14443-1 to ISO 14443-3 standards;
· said applications (M1, M2, M3) are MIFARE applications; and
· said second module (PG2) is suitable for implementing an application (1432) to generate the sending and receiving of messages exchanged with said external entity (100) in the context of said MIFARE applications (M1, M2, M3).

8. An electronic device according to any one of claims 1 to 6, **characterized in that** said selection means select said application from amongst said applications in sequential manner.

9. A selection method that can be implemented by an electronic device (1000) suitable for communicating with an external entity and for implementing at least two applications communicating with said external entity using the same protocol, each of said applications being in a dedicated memory, the method comprising:
· a step of generating a predetermined event on reception of at least one particular message received from said entity or in the event of communication being initialized with said entity;
· a step of detecting said event; and
· a step of selecting one application amongst said applications, the selected application being chosen independently of any message received from said external entity and by using a pointer pointing to the selected application at a given instant, the detection of said event triggering the movement of said pointer,
said applications being MIFARE application.

10. A computer program including instructions for executing the steps of the selection method according to claim 9 when said program is executed by a computer.

11. A recording medium readable by a computer and having recorded thereon a computer program including instructions for executing the steps of the selection method according to claim 10.
